# EUROPEAN PATENT APPLICATION

(11) **EP 4 535 071 A1**
(43) Date of publication of application: **09.04.2025**
(21) Application number: 23201188.2
(22) Date of filing: 02.10.2023
(51) Int. Cl.: G02F 1/125, G02F 1/35, G02F 1/365

(54) **RADIATION BROADENING SYSTEM**

(71) Applicant: ASML Netherlands B.V., 5500 AH Veldhoven (NL)
(72) Inventor: BUIJS, Robin, Veldhoven (NL); ABDOLVAND, Amir, Veldhoven (NL); BELLI, Federico, Edinburgh (GB)
(74) Representative: ASML Netherlands B.V.

(57) **Abstract**

A radiation broadening system comprising a hollow optical waveguide containing a gas medium and one or more transducers configured to generate an acoustic mode in the gas medium.

## Description

### FIELD

The present invention relates to a radiation broadening system. The radiation broadening system may form part of a radiation source. The radiation source may form part of a metrology tool.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

Metrology tools, such as a scatterometer, topography measurement system, or position measurement system are used to measure properties of substrates. The measurements may be performed after exposure of a substrate. The measurements may be used to adjust operation of the lithographic apparatus that exposed the substrate to improve pattern reproduction. Adjustments may include modifying the illumination scheme and/or, adjusting the projection optics.

The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data. The different frequencies may for example be provided as a sequence of different frequencies (i.e. a series of frequencies).. Different radiation frequencies may also be able to interrogate and discover different properties of a metrology target. Broadband radiation may be useful in metrology systems such as for example level sensors, alignment mark measurement systems, scatterometry tools, or inspection tools. A broadband radiation source may be a supercontinuum source. A controllable color filter may be used to select a wavelength to illuminate a substrate for a measurement, and may then select another color to illuminate the substrate for a subsequent measurement.

High quality broadband radiation, for example supercontinuum radiation, may be difficult to generate. One method for generating broadband radiation may be to use a radiation broadening system to broaden high-power narrow band or single frequency input radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localized high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

Existing radiation broadening systems suffer from the disadvantage that changing the wavelength of output radiation is difficult and/or slow.

### SUMMARY

According to a first aspect of the invention there is provided a radiation broadening system comprising a hollow optical waveguide containing a gas medium and one or more transducers configured to generate an acoustic mode in the gas medium.

Advantageously, the use of an acoustic mode provides a modulation of the wavelength spectrum of the broadened radiation. This allows a desired wavelength spectrum to be selected using an optical switch which is synchronized with the acoustic mode.

The hollow optical waveguide may be an optical fiber with a hollow core.

The one or more transducers may comprise a pair of transducers provided on opposite sides of the optical fiber.

The one or more transducers may comprise a transducer which surrounds the optical fiber.

One or more anti-resonant structures may be provided on an outer surface of the optical fiber.

The hollow waveguide may be formed by a plurality of glass rods located within a gas reservoir. The one or more transducers may comprise a plurality of transducers also located within the gas reservoir.

At least four glass rods may be provided.

The transducers may be located between pairs of rods.

According to a second aspect of the invention there is provided a radiation source comprising the radiation broadening system of the first aspect of the invention, and further comprising a pump radiation source configured to provide pump radiation into the hollow optical waveguide.

The radiation source may further comprise an optical switch configured to selectively transmit an output radiation beam provided from the radiation broadening system, the optical switch being synchronized with the one or more transducers.

The radiation source may further comprise an optical switch configured to selectively transmit the pump radiation beam, the optical switch being synchronized with the one or more transducers.

According to a third aspect of the invention there is a provided a metrology tool comprising the radiation source of the second aspect of the invention.

According to a fourth aspect of the invention there is provided a lithographic apparatus comprising the radiation source of any of the second aspect or the metrology tool of the third aspect.

According to a fifth aspect of the invention there is provided a method of broadening radiation comprising directing a pump radiation beam into a hollow optical waveguide containing a gas medium configured to broaden a spectrum of the radiation beam, the method further comprising using one or more transducers to generate an acoustic mode in the gas medium and thereby modify the spectrum broadening provided by the gas medium.

Advantageously, the use of an acoustic mode provides a modulation of the wavelength spectrum of the broadened radiation. This allows a desired wavelength spectrum to be selected using an optical switch which is synchronized with the acoustic mode.

The method may further comprise using an optical switch synchronized to the one or more transducers to select a desired output wavelength.

The optical switch may be located between a source of the pump radiation beam and the hollow optical waveguide.

The optical switch may be located at an output of the hollow optical waveguide.

Features of different aspects of the invention may be combined together.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic representation of a scatterometer which may include a radiation source according to an embodiment of the invention;
- Figure 5 depicts a schematic representation of a level sensor which may include a radiation source according to an embodiment of the invention;
- Figure 6 depicts an alignment sensor which may include a radiation source according to an embodiment of the invention;
- Figure 7 depicts a schematic representation of an radiation broadening system according to an embodiment of the invention;
- Figure 8 depicts a schematic representation of a radiation source according to an embodiment of the invention;
- Figure 9 depicts a schematic representation of an acoustic mode of an optical fiber of the radiation source;
- Figure 10 is a graph which shows different output spectra provided from the radiation source;
- Figure 11 is a graph which shows time-averaged intensity of radiation provided from the radiation source;
- Figure 12 depicts a schematic representation of another radiation broadening system according to an embodiment of the invention; and
- Figure 13 depicts a schematic representation of a radiation broadening system according to an alternative embodiment of the invention.

### DETAILED DESCRIPTION

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

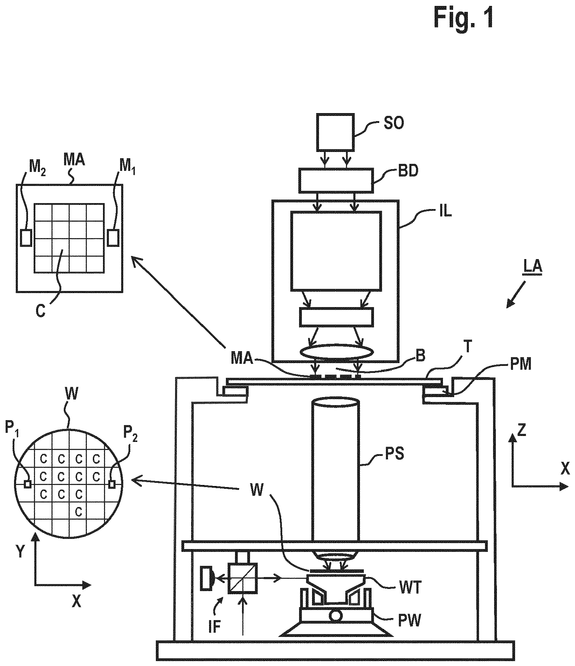

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

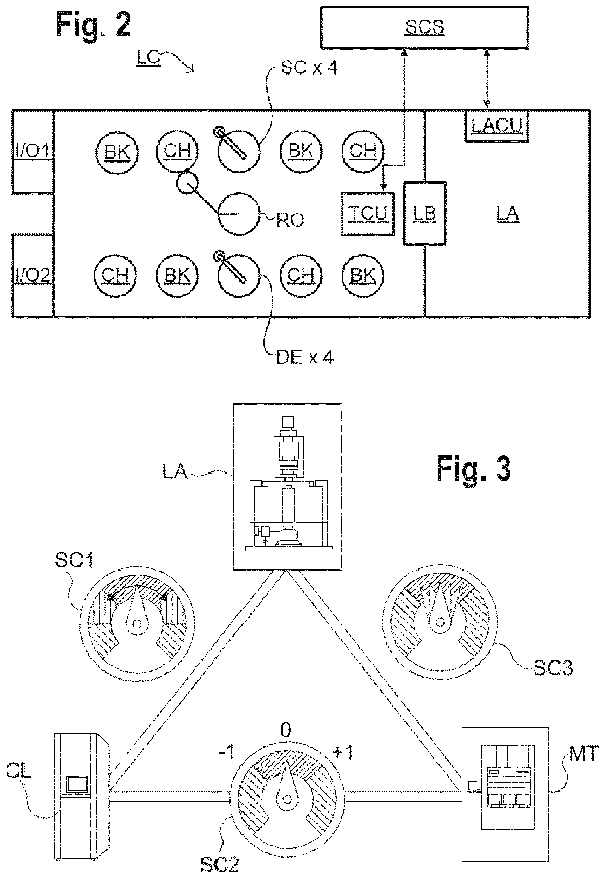

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology tool, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

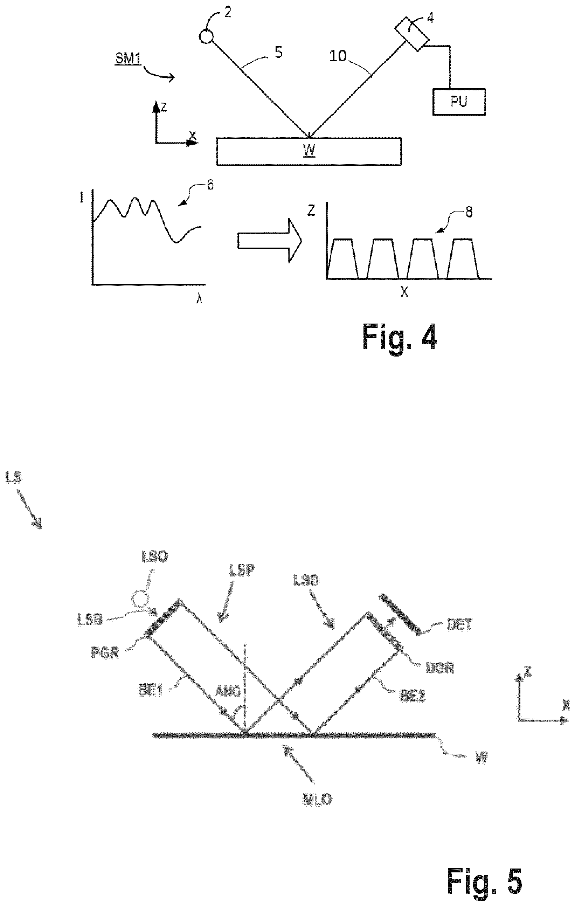

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

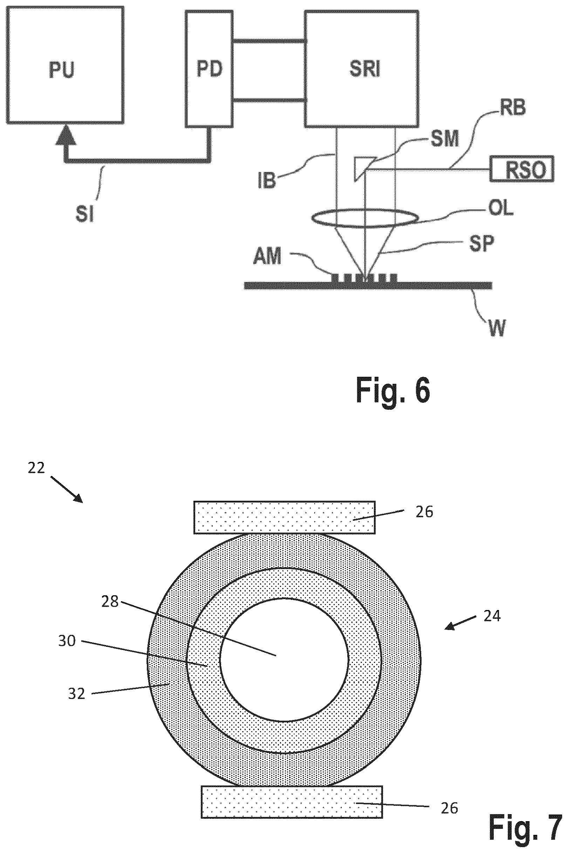

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology and/or inspection tools (also referred to as measurement tools) such as the ones described above often use radiation to obtain measurement data. Depending on the measurement target and the properties to be measured, different types of radiation may be used. One differing property of radiation is the wavelength(s) used to obtain a measurement, as different wavelengths may provide different information about a measurement target. Some measurement tools may use broadband radiation, such as supercontinuum radiation, either to measure using broadband radiation, or to be able to tune and select the measurement wavelength(s) to be used. Depending on the range of output wavelengths and properties of the broadband source, difference methods may be used to obtain the broadband radiation. In some implementations for generating broadband radiation, nonlinear effects may be used to broaden narrow wavelength range input radiation (also referred to as pump radiation). Different known setups and methods exist to achieve nonlinear broadening. Often these methods rely on the confinement of the pump radiation to achieve high intensities needed to experience significant nonlinear effects.

A known method of confining radiation for nonlinear broadening includes confinement of laser pump radiation inside an optical fiber, to generate broadband radiation. The laser may be an ultrashort pulsed laser (e.g. pico- to femto-second pulses). The nonlinear propagation dynamics of this radiation inside a fiber may lead to broadband radiation generation as a result of soliton self-compression and/or modulational instability. This may for example be used to generate supercontinuum radiation spanning a wavelength range from IR to UV.

The methods described above may be used for generating broadband radiation using nonlinear broadening of laser pulses (e.g. femtosecond laser pulses) propagating along a gas-filled hollow core fiber e.g. a hollow core photonic crystal fiber (42-PCF). The gas mixture (which may also be referred to as a gas composition) filling the fiber may comprise one or more components, wherein at least one of the components is a working gas. The working gas may be a gas that exhibits significant nonlinear effects when interacting with high intensity radiation. The performance and lifetime of the light source may depend on the composition of the gas mixture filling the fiber.

In some implementations, the broadband output radiation is created in a photonic crystal fiber (PCF). In several embodiments, such a photonic crystal fiber has microstructures around its fiber core assisting in confining radiation that travels through the fiber in the fiber core.

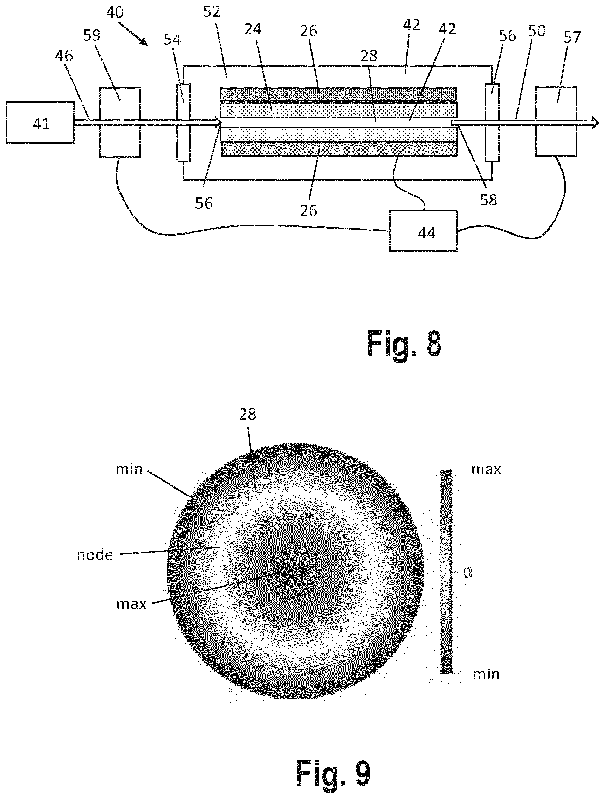

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (42-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

The optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (42-PBFs, for example a Kagome fiber).

A number of types of 42-PCFs can be engineered, each based on a different physical guidance mechanism. Two such 42-PCFs include: hollow-core photonic bandgap fibers (42-PBFs) and hollow-core anti-resonant reflecting fibers (42-ARFs). Detail on the design and manufacture of 42-PCFs can be found in US patent US2004/015085A1 (for 42-PBFs) and International PCT patent application WO2017/032454A1 (for Hollow Core anti-resonant reflecting fibers), which are incorporated herein by reference.

An example of an radiation broadening system 22 according to an embodiment of the invention is now described with reference to Figure 7. Figure 7 is a schematic cross sectional view, showing the optical fiber 24 in a transverse plane, with transducers 26 located on opposite sides of the optical fiber.

The optical fiber 24 comprises an elongate body, which is longer in one dimension compared to the other two dimensions of the fiber. This longer dimension may be referred to as an axial direction and may define an axis of the optical fiber 24. The two other dimensions define a plane which may be referred to as a transverse plane. Figure 7 shows a cross-section of the optical fiber 24 in this transverse plane (i.e. perpendicular to the axis), which is labelled as the x-y plane. The transverse cross-section of the optical fiber 24 may be substantially constant along the fiber axis.

It will be appreciated that the optical fiber 24 and the transducers 26 (which may be piezo-electric transducers) may have some degree of flexibility. The optical fiber 24 and transducers 26 may therefore be curved rather than straight (although a straight optical fiber and transducers may be used). In some instances therefore the direction of the axis may not, in general, be uniform along the length of the optical fiber. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber 24 is flexed.

The optical fiber 24 may have any length and it will be appreciated that the length of the optical fiber 24 may be dependent on the application. The optical fiber 24 may have a length between 1 cm and 10 m, for example, the optical fiber 24 may have a length between 10 cm and 100 cm.

The optical fiber 24 comprises: a hollow core 28, a cladding portion 30 surrounding the hollow core; and a jacket portion 32 surrounding and supporting the cladding portion. The cladding portion 30 guides radiation that propagates through the optical fiber 24 predominantly inside the hollow core 28. The guided radiation may be in the form of a Gaussian mode. The hollow core 28 of the optical fiber 24 may be disposed substantially in a central region of the optical fiber, so that the axis of the optical fiber may also define an axis of the hollow core of the optical fiber.

Figure 8 depicts a radiation source 40 according to an embodiment of the invention. The radiation source 40 comprises a pulsed pump radiation source 41 or any other type of source that is capable of generating short pulses of a desired length and energy level. Figure 8 also depicts the optical fiber 24 with hollow core 28 (described above in connection with Figure 7), and a gas working medium 42 disposed within the hollow core. The transducers 26 are located on opposite sides of the optical fiber 24. As depicted, the transducers 26 may extend to ends of the optical fiber 24. In some embodiments the transducers may be shorter than the optical fiber 24. Operation of the transducers 26 is controlled by a controller 44.

The pulsed pump radiation source 41 is configured to provide input radiation 46. The hollow core 28 of the optical fiber 24 is arranged to receive the input radiation 46 from the pulsed pump radiation source 41 and broaden it to provide output radiation 50. The gas working medium 42 enables the broadening of the frequency range of the received input radiation 46 so as to provide broadband output radiation 50.

The radiation source 40 further comprises a reservoir 52. The optical fiber 24 is disposed inside the reservoir 52. The reservoir 52 may also be referred to as a housing, container or gas cell. The reservoir 52 is configured to contain the gas working medium 42. The reservoir 52 may comprise one or more features, known in the art, for controlling, regulating, and/or monitoring the composition of the gas working medium 42 inside the reservoir 52. The reservoir 52 is provided with a first transparent window 54. In use, the optical fiber 24 is disposed inside the reservoir 52 such that the first transparent window 54 is located proximate to an input end 56 of the optical fiber 24. The first transparent window 54 may form part of a wall of the reservoir 52. The first transparent window 54 may be transparent for at least the received input radiation frequencies, so that received input radiation 46 (or at least a large portion thereof) may be coupled into the optical fiber 24 located inside reservoir 52. It will be appreciated that optics (not shown) may be provided for coupling the input radiation 46 into the optical fiber 24.

The reservoir 52 is provided with a second transparent window 56, forming part of a wall of the reservoir 52. In use, when the optical fiber 24 is disposed inside the reservoir 52, the second transparent window 56 is located proximate to an output end 58 of the optical fiber 24. The second transparent window 56 may be transparent for at least the frequencies of the broadband output radiation 50 of the apparatus 120.

In this context a window may be transparent for a frequency if at least 50%, 75%, 85%, 90%, 95%, or 99% of incident radiation of that frequency on the window is transmitted through the window.

Both the first 54 and the second 56 transparent windows may form an airtight seal within the walls of the reservoir 52 so that the gas working medium 42 may be contained within the reservoir 52. It will be appreciated that the gas 48 may be contained within the reservoir 52 at a pressure different to the ambient pressure of the reservoir 52.

The gas working medium 42 may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulation instability (MI), soliton self-compression, soliton fission, Kerr effect, Raman effect and dispersive wave generation, details of which are described in WO2018/127266A1 and US9160137B1 (both of which are hereby incorporated by reference).

In order to achieve frequency broadening, high intensity radiation may be desirable. An advantage of having a hollow core optical fiber 24 is that it may achieve high intensity radiation through strong spatial confinement of radiation propagating through the optical fiber (providing high localized radiation intensities). The radiation intensity inside the optical fiber 24 may be high, for example due to high received input radiation intensity and/or due to strong spatial confinement of the radiation inside the optical fiber 24. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core optical fiber 24 may be that the majority of the radiation guided inside the optical fiber 24 is confined to the hollow core 28. Therefore, the majority of the interaction of the radiation inside the optical fiber 24 is with the gas working medium 42, which is provided inside the hollow core 28 of the optical fiber 24. As a result, the wavelength broadening effects of the gas working medium 42 on the radiation may be increased.

The received input radiation 46 may be electromagnetic radiation. The input radiation 46 may be received as pulsed radiation. For example, the input radiation 46 may comprise ultrafast pulses, for example, generated by a laser.

The input radiation 46 may be coherent radiation. The input radiation 46 may be collimated radiation, an advantage of which may be to facilitate and improve the efficiency of coupling the input radiation 46 into the optical fiber 24. The input radiation 46 may comprise a single frequency, or a narrow range of frequencies. The input radiation 46 may be generated by a laser. Similarly, the output radiation 50 may be collimated and/or may be coherent.

The broadband range of the output radiation 50 may be a substantially continuous range, comprising a substantially continuous range of radiation frequencies. In this context, a range of frequencies which includes very fine discrete spectral lines that are not visible to a conventional detector may be considered to be substantially continuous. The output radiation 50 may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation 50 may comprise for example electromagnetic radiation having a wavelength range of 100 nm or more. The wavelength of the supercontinuum output radiation is tunable using an acoustic mode generated by the transducers 26, as explained further below.

The input radiation 46 provided by the pulsed pump radiation source 41 may be pulsed. The input radiation 46 may comprise electromagnetic radiation of one or more frequencies between 200 nm and 2 µm. The input radiation 46 may for example comprise electromagnetic radiation with a wavelength of 1.03 µm. The repetition rate of the pulsed radiation 46 may be of an order of magnitude of 1 kHz to 100 MHz. The pulse energies may have an order of magnitude of 0.1 µJ to 100 µJ, for example 1 - 10 µJ. A pulse duration for the input radiation 46 may be between 10 fs and 10 ps, for example 300 fs. The average power of input radiation 46 may be between 100 mW to several 100 W. The average power of input radiation 46 may for example be 20 - 50 W.

The wavelengths of the radiation output from the optical fiber 24 may be determined in part by properties of the optical fiber such as optical fiber length, size and shape of the hollow core 101. These properties are fixed for a given optical fiber 24 and thus are not modified to change the wavelengths of radiation output from the optical fiber. The wavelengths of the radiation output from the optical fiber 24 may be adjusted by adjusting the type of gas in the optical fiber 24. However, changing the type of gas is a slow process.

The broadband output radiation 50 provided by the radiation source 40 may have an average output power of at least 1 W. The average output power may be at least 5 W. The average output power may be at least 10 W. The broadband output radiation 50 may be pulsed broadband output radiation 50. The broadband output radiation 50 may have a power spectral density in the entire wavelength band of the output radiation of at least 0.01 mW/nm. The power spectral density in the entire wavelength band of the broadband output radiation may be at least 3 mW/nm.

The spectrum of the broadband output radiation 50 provided by the radiation source 40 can be adjusted by changing the pressure of the gas working medium 42 in the hollow core 28 of the optical fiber 24. In embodiments of the invention the pressure of the gas working medium is changed using an acoustic mode. In the embodiment depicted in Figures 7 and 8 this is achieved by generating an acoustic mode in the gas working medium 42 in the hollow core 28.

Figure 9 depicts in cross section the fundamental acoustic mode of the hollow core 28 of the optical fiber 24. The hollow core of the fiber is an example of a hollow optical waveguide within which an acoustic mode in a gas working medium may be generated. Embodiments of the invention may use other forms of hollow optical waveguide. Because Figure 9 is in greyscale rather than color, labels have been added to identify the minimum and maximum pressures of the gas. Figure 9 depicts the pressure of the gas in the hollow core 28 when the fundamental acoustic mode is excited. In Figure 9, the pressure of the gas is at a maximum at the center of the fiber follow core 28 and is at a minimum at a periphery of the fiber hollow core.

Due to the nature of the acoustic mode, the pressure of the gas 42 in the fiber hollow core 28 will vary at the acoustic frequency (which in this embodiment may be of the order of MHz). Thus, at the center of the fiber hollow core 28 the pressure varies between the maximum and the minimum pressure, varying with the acoustic frequency. Similarly, the pressure at the periphery of the fiber hollow core 28 varies between the minimum and the maximum, varying with the acoustic frequency. At a midpoint between the center and the periphery there is a node of the acoustic mode. At this midpoint the pressure of the gas does not vary but instead remains constant. The pressure of the gas at the node may be the pressure that would exist if the acoustic mode was not excited. This pressure, which corresponds with the pressure of gas 42 in the reservoir 52, may be referred to as the background gas pressure.

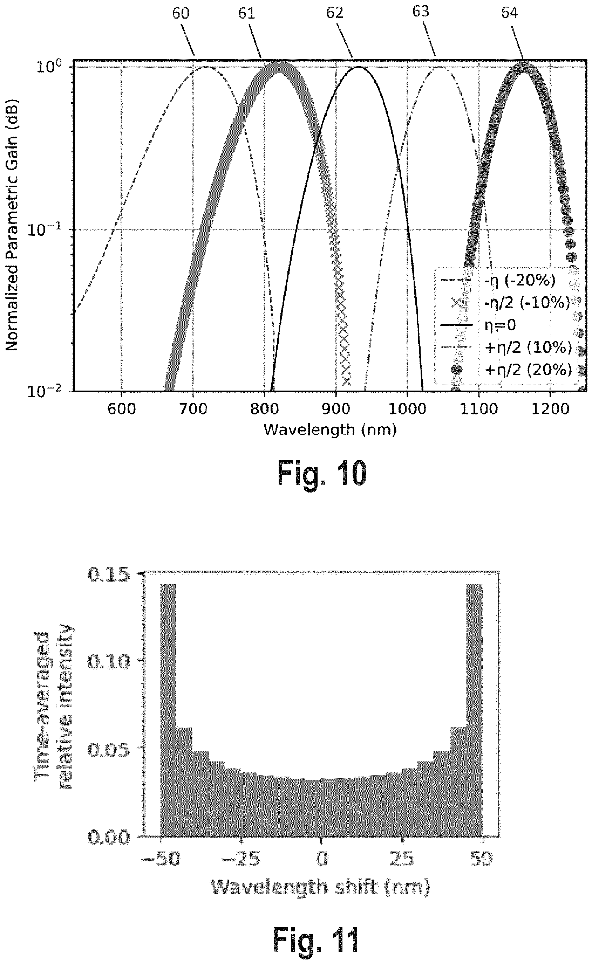

Figure 10 depicts an example of spectra of output radiation 50 provided from the radiation source 40. The horizontal axis of the graph in Figure 10 is wavelength in nm and the vertical axis is the normalized parametric gain (i.e. power of the output radiation 50 relative to the power of the input pump radiation 46 (see Figure 8)). Five output spectra 60-64 are depicted. A central output spectrum 62 is emitted when the acoustic mode has no effect upon the pressure of gas 42 in the fiber hollow core 28. In other words, the pressure of gas across the fiber hollow core is substantially flat (at the background gas pressure). A right-hand peak 64 shows the output spectrum when the acoustic mode has increased the pressure of gas at the center of the fiber hollow core 28 to be 20% more than the background gas pressure. As may be seen, this increase of gas pressure has increased a central wavelength of the output spectrum from around 880 nm to around 1120 nm.

A left-hand spectrum 60 is the output spectrum when the pressure of gas in the fiber hollow core 28 is 20% less than the background gas pressure. As can be seen, a central wavelength of this spectrum is around 660 nm.

Additional spectra 61, 63 are also depicted for the gas pressure at the centre of the fiber hollow core 28 being 10% below the background pressure and 10% above the background pressure.

As may be seen from Figure 10, the acoustic mode causes a central wavelength of the spectrum of the output radiation 50 to vary over a wavelength range of around 450 nm. As noted above, this variation of the output spectrum takes place at the frequency of the acoustic mode (e.g. of the order of MHz).

As depicted in Figure 9, when the acoustic mode provides a maximum of gas pressure at the centre of the fiber hollow core 28, a minimum of gas pressure is present at the periphery of the fiber hollow core. The effect of the central maximum and peripheral minimum of gas pressures upon the output radiation is not equal. The pump radiation 46 (see Figure 8) has a Gaussian profile (or other peaked profile) within the fiber hollow core 28. As a result, the intensity of radiation at the centre of the fiber hollow core 28 is much higher than the intensity of radiation at the periphery of the fiber hollow core. The generation of broadband output radiation 50 by the gas working medium 42 is a non-linear process which is driven by the intensity of the pump radiation. As a result, the output radiation 50 provided from the radiation source 40 depends upon the pressure of the gas in the vicinity of the centre of the fiber hollow core 28 and is not significantly affected by the pressure of gas at the periphery of the fiber hollow core.

Referring again to Figure 8, the controller 44 provides a modulated output signal which causes the transducers 26 to vibrate at a frequency which generates the fundamental acoustic mode. That is, the transducers are modulated at a frequency which corresponds with the frequency of the fundamental acoustic mode. The controller 44 also provides a signal to an acousto-optic modulator 57 provided at an output of the radiation source 40. The acousto-optic modulator 57 is configured to selectively transmit and block the output radiation beam 50 depending upon the signal received from the controller 44. The signal provided by the controller 44 is synchronized with the signal driving the transducers 26. The acousto-optic modulator 57 is used to select a spectrum of the output radiation 50. This is achieved by the controller 44 (or other electronics) adjusting a phase of the signal driving the acousto-optic modulator 57 (with respect to the signal driving the transducers 26). In this way, any of the spectra 60-64 depicted in Figure 10 may be selected through a use of the acousto-optic modulator 57.

In an alternative embodiment, an acousto-optic modulator 59 may be provided between the pump radiation source 41 and the optical fiber 24. The acousto-optic modulator 59 may receive an input signal from the controller 44 which is synchronized with the signal driving the transducers 26. The phase of the signal provided to the acousto-optic modulator 59 may be selected such that the pump radiation only passes through the acousto-optic modulator and into the optical fiber 24 when the acoustic mode within the fiber hollow core 28 provides a desired output radiation spectrum. An embodiment of this type may provide a longer lifetime of the optical fiber 24.

In general, a modulated optical switch may be used to select a spectrum output from the radiation source 40. The modulated optical switch may be an acousto-optic modulator, electro-optic modulator, or other form of modulator. The modulated optical switch may be provided at an output of the radiation source 40, or positioned to block a pump radiation beam 46. Although Figure 8 depicts two modulated optical switches, only one modulated optical switch is needed in practice.

In an alternative configuration (not depicted), a filter may be used to select a desired wavelength or range of wavelengths from the output radiation beam 50. The filter may be adjustable (e.g. a rotatable reflective grating).

In a further alternative configuration, the pump radiation source 41 may include an optical switch which forms part of the pump radiation source, the optical switch being synchronized with the modulation of the transducers 26.

In general, the pulsed pump radiation beam 46 may be synchronized with the modulation of the transducers.

As noted further above, the frequency of the acoustic mode of the hollow fiber capillary 28 may be of the order of MHz. In such cases, the signal provided by the controller 44 is of the order of MHz. The repetition frequency of the pulsed pump beam 46 provided by the pump radiation source 41 may be significantly highly than this (e.g. tens of MHz or more). As a result, multiple pulses of pump radiation may pass through the fiber hollow core 28 for a given open period of the acousto-optic modulator 57, 59.

Figure 11 is a graph which depicts the time-averaged relative intensity of the output radiation beam 50 when the amplitude of the acoustic mode is selected to provide a wavelength range of 100 nm (peak-to-peak). As may be seen from Figure 11, this time-averaged spectrum is described by an arcsine distribution. Because gas pressure changes more slowly near the pressure extremes, the output spectrum spends more time at extreme pressure values. That is, more radiation is emitted near the extremes of the modulated wavelength band. From Figure 11 is may be understood that if a particular peak wavelength is desired, the acoustic modulation amplitude may be selected such that the peak wavelength is provided at a maximum or a minimum of the acoustic mode.

In Figures 7 and 8 the transducers 26 are provided as a pair on opposite sides of the optical fiber 24. The transducers 26 may be piezo-electric transducers. The transducers 26 may be fixed to the optical fiber 24 (e.g. using adhesive). The transducers 26 may be pressed against the optical fiber 24 by a clamp (not depicted).

In an alternative arrangement, a transducer (e.g. piezo-electric) may be deposited onto the optical fiber 24. The transducer may surround the fiber.

In general, the transducer(s) may be arranged such that they cause contraction and expansion of at least part of the optical fiber 24 (in a direction transverse to the axis of the fiber). The contraction and expansion excites an acoustic mode of the gas in the optical fiber 24. The contraction and expansion may overlap with a mechanical mode (e.g. a drum mode) of gas inside the optical fiber 24.

In the above description the fundamental acoustic mode of the optical fiber 24 is excited. Other acoustic modes may be excited. Where higher order acoustic modes are excited, the distribution of pressure across the acoustic mode is more complex. As a result, the spectrum of the output radiation 50 may be broader and/or less tunable using an optical switch. A wavelength selective filter may be used to select a wavelength or range of wavelengths of interest.

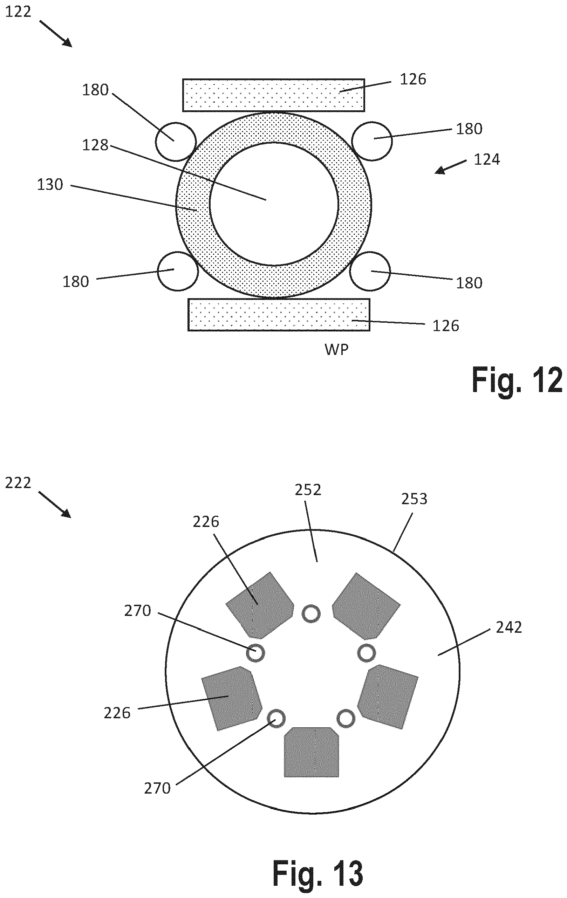

Figure 12 schematically depicts in cross section a radiation broadening system 122 according to an alternative embodiment of the invention. The radiation broadening system comprises an optical fiber 124 which comprises: a hollow core 128, a cladding portion 130 surrounding the hollow core, and anti-resonant structures 180. The anti-resonant structures may be referred to as anti-resonant fibers. Radiation propagates in a guided mode through the hollow core 128. The guided radiation may be in the form of a Gaussian mode. Transducers 126 are provided on opposite sides of the optical fiber 124. The transducers are configured to excite an acoustic mode in gas provided in the hollow core 128. The radiation broadening system may form part of a radiation source (e.g. of the type depicted in Figure 8).

Figure 13 schematically depicts in cross section a radiation broadening system 222 according to an alternative embodiment of the invention. In this embodiment a reservoir 252 is formed by a housing 253. A gas working medium 242 is provided within the reservoir. Windows (not depicted) are located at either end of the reservoir. Five glass rods 270 extend through the reservoir 252. A separation between rods may for example may be of the order of microns.

Five acoustic transducers 226 are provided within the reservoir 252. To avoid complicating the figure not all rods and transducers are labelled. An acoustic transducer 226 is provided between each respective pairs of rods 270. In other embodiments, the number of transducers may be different from the number of rods. For example, the number of transducers may be less than the number of rods. A single transducer may be inefficient. Two or more transducers may provide efficient modulation of the gas 242.

The radiation broadening system 222 may form part of a radiation source (e.g. of the type depicted in Figure 8).

In use, a pump radiation beam is coupled into the reservoir 252 and is guided through the reservoir by the glass rods 270. The glass rods 270 thus form a hollow optical waveguide. An example of a configuration of this type is described in more detail in APL Photonics 6, 061301 (2021). The acoustic transducers 226 are modulated at a frequency which is selected to generate an acoustic mode in the portion of the reservoir 252 which is surrounded by the glass rods 270.

Selection of the wavelength of output radiation provided by the embodiment of Figure 13 is achieved in the same way as mentioned above in connection with Figure 8, e.g. modulation of the pump radiation beam or modulation of the output radiation beam.

An advantage of the embodiment of Figure 13 is that reservoir 152 acts as an acoustic resonator which has a larger cross-sectional area than the fiber hollow core. As a result, the transducers 226 are able to excite a wider range of acoustic modes. In addition, an acoustic mode may be excited which is relatively uniform across a cross-sectional area through which the pump radiation beam passes. This may provide a relatively uniform pressure profile (which changes with the acoustic frequency), and may provide a more uniform spectrum of output radiation.

Although five optical rods 270 and five transducers 226 are depicted in Figure 13, other numbers of rods may be used. For example, 4 rods may be used, 5, 6, 7 or 8 rods may be used. Using more than 8 rods may generate a more complex acoustic mode, and thus may reduce a cross-sectional area of gas 242 which has a desired pressure.

Described embodiments of the invention refer to a pulsed pump radiation source. However, the pump radiation source does not have to be pulsed. A continuous beam of radiation may be used. The radiation source may be a pulsed laser, may be a continuous wave laser, may be a plasma source, etc. A pulsed radiation source may be preferred because it provides a higher peak intensity of radiation.

Acoustic modes excited by the one or more transducers may be transverse acoustic modes.

The one or more transducers may be the same length as the optical waveguide. The one or more transducers may be shorter than the optical waveguide.

Embodiments of the invention may advantageously provide a radiation source that is able to switch quickly between desired wavelengths (e.g. through the use of one or more automated filters provided at an output of the radiation source).

Further embodiments are disclosed in the following list of numbered clauses:
1. A radiation broadening system comprising a hollow optical waveguide containing a gas medium and one or more transducers configured to generate an acoustic mode in the gas medium.
2. The radiation broadening system of clause 1, wherein the hollow optical waveguide is an optical fiber with a hollow core.
3. The radiation broadening system of clause 2, wherein the one or more transducers comprise a pair of transducers provided on opposite sides of the optical fiber.
4. The radiation broadening system of clause 2, wherein the one or more transducers comprises a transducer which surrounds the optical fiber.
5. The radiation broadening system of clause 2 or clause 3, wherein one or more anti-resonant structures are provided on an outer surface of the optical fiber.
6. The radiation broadening system of clause 1, wherein the hollow waveguide is formed by a plurality of glass rods located within a gas reservoir, and wherein the one or more transducers comprises a plurality of transducers also located within the gas reservoir.
7. The radiation broadening system of clause 7, wherein at least four glass rods are provided.
8. The radiation broadening system of clause 6 or clause 7, wherein transducers are located between pairs of rods.
9. A radiation source comprising the radiation broadening system of any preceding clause, and further comprising a pump radiation source configured to provide pump radiation into the hollow optical waveguide.
10. The radiation source of clause 9, further comprising an optical switch configured to selectively transmit an output radiation beam provided from the radiation broadening system, the optical switch being synchronized with the one or more transducers.
11. The radiation source of clause 9, further comprising an optical switch configured to selectively transmit the pump radiation beam, the optical switch being synchronized with the one or more transducers.
12. A metrology tool comprising the radiation source of any of clauses 9 to 11.
13. A lithographic apparatus comprising the radiation source of any of clauses 9 to 11 or the metrology tool of clause 12.
14. A method of broadening radiation comprising directing a pump radiation beam into a hollow optical waveguide containing a gas medium configured to broaden a spectrum of the radiation beam, the method further comprising using one or more transducers to generate an acoustic mode in the gas medium and thereby modify the spectrum broadening provided by the gas medium.
15. The method of clause 14, further comprising using an optical switch synchronized to the one or more transducers to select a desired output wavelength.
16. The method of clause 15, wherein the optical switch is located between a source of the pump radiation beam and the hollow optical waveguide.
17. The method of clause 15, wherein the optical switch is located at an output of the hollow optical waveguide.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology tool, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

## Claims

1. A radiation broadening system comprising a hollow optical waveguide containing a gas medium and one or more transducers configured to generate an acoustic mode in the gas medium.

2. The radiation broadening system of claim 1, wherein the hollow optical waveguide is an optical fiber with a hollow core.

3. The radiation broadening system of claim 2, wherein the one or more transducers comprise a pair of transducers provided on opposite sides of the optical fiber.

4. The radiation broadening system of claim 2, wherein the one or more transducers comprises a transducer which surrounds the optical fiber.

5. The radiation broadening system of claim 2 or claim 3, wherein one or more anti-resonant structures are provided on an outer surface of the optical fiber.

6. The radiation broadening system of claim 1, wherein the hollow waveguide is formed by a plurality of glass rods located within a gas reservoir, and wherein the one or more transducers comprises a plurality of transducers also located within the gas reservoir.

7. The radiation broadening system of claim 7, wherein at least four glass rods are provided.

8. The radiation broadening system of claim 6 or claim 7, wherein transducers are located between pairs of rods.

9. A radiation source comprising the radiation broadening system of any preceding claim, and further comprising a pump radiation source configured to provide pump radiation into the hollow optical waveguide.

10. The radiation source of claim 9, further comprising an optical switch configured to selectively transmit an output radiation beam provided from the radiation broadening system, the optical switch being synchronized with the one or more transducers.

11. The radiation source of claim 9, further comprising an optical switch configured to selectively transmit the pump radiation beam, the optical switch being synchronized with the one or more transducers.

12. A metrology tool comprising the radiation source of any of claims 9 to 11.

13. A lithographic apparatus comprising the radiation source of any of claims 9 to 11 or the metrology tool of claim 12.

14. A method of broadening radiation comprising directing a pump radiation beam into a hollow optical waveguide containing a gas medium configured to broaden a spectrum of the radiation beam, the method further comprising using one or more transducers to generate an acoustic mode in the gas medium and thereby modify the spectrum broadening provided by the gas medium.

15. The method of claim 14, further comprising using an optical switch synchronized to the one or more transducers to select a desired output wavelength.
